# EUROPÄISCHE PATENTSCHRIFT

(11) **EP 2 186 379 B1**
(45) Veröffentlichungstag und Bekanntmachung des Hinweises auf die Patenterteilung: **01.06.2011**
(21) Anmeldenummer: 08803063.0
(22) Anmeldetag: 15.08.2008
(51) Int. Cl.: H04W 88/06, G08G 1/09

(54) **VORRICHTUNG UND VERFAHREN ZUM ÜBERTRAGEN VON INFORMATIONEN**
DEVICE AND METHOD FOR TRANSMITTING INFORMATION
DISPOSITIF ET PROCÉDÉ POUR TRANSMETTRE DES INFORMATIONS

(30) Priorität: 29.08.2007 DE 102007040991; 29.08.2007 DE 102007040974
(43) Veröffentlichungstag der Anmeldung: 19.05.2010
(73) Patentinhaber: Continental Teves AG & Co. oHG, 60488 Frankfurt (DE)
(72) Erfinder: STÄHLIN, Ulrich, 65670 Eschborn (DE); MENZEL, Marc, 35043 Marburg (DE); LÜKE, Stefan, 57462 Oipe (DE)
(86) Internationale Anmeldenummer: PCT/EP2008/060772
(87) Internationale Veröffentlichungsnummer: WO 2009/027251

(56) Entgegenhaltungen:
- EP-A- 1 523 130
- JP-A- 2004 080 420
- TONY K. MAK, KENNETH P. LABERTEAUX, RAJA SENGUPTA: "A multi-channel VANET providing concurrent safety and commercial services" PROCEEDINGS OF THE 2ND ACM INTERNATIONAL WORKSHOP ON VEHICULAR AD HOC NETWORKS, [Online] 2. September 2005 (2005-09-02), Seiten 1-9, XP002511742 ACM New York ISBN: 1-59593-141-4 Gefunden im Internet: URL:http://portal.acm.org/citation.cfm?id= 1080756> [gefunden am 2009-01-22]

## Beschreibung

Die Erfindung betrifft eine Vorrichtung und ein Verfahren zum Übertragen, d.h. zum Empfangen und/oder Senden, von insbesondere auch Sicherheitsinformationen in einer auf WLAN (Wireless Local Area Network) nach dem IEEE802.11-Standard basierenden Fahrzeug-zu-Fahrzeug-Kommunikation.

Fahrzeug-zu-Fahrzeug-Kommunikation wird im zunehmenden Maße dafür eingesetzt, Sicherheitsinformationen von einem Fahrzeug an ein anderes Fahrzeug zu übertragen, beispielsweise um den Fahrer vor Gefahrensituationen zu warnen oder Fahrerassistenzsysteme des Fahrzeugs zu unterstützen.

Versuche haben gezeigt, dass die drahtlose Netzwerktechnik nach dem IEEE802.11-Standard grundsätzlich zur Einrichtung derartiger Ad-Hoc Kommunikationsnetze geeignet ist, an denen die jeweils im Empfangsbereich liegenden Fahrzeuge teilnehmen.

Zur Realisierung einer geeigneten Fahrzeug-zu-Fahrzeug-Kommunikation wurde für zukünftige Anwendungen der IEEE802.11p-Standard vereinbart, der die Grundlage für sogenannte DSRC-Systeme (Dedicated Short Range Communication) bildet, welche die Bit-Übertragungsschicht (Physical Layer) und die Verbindungsschicht (Data Link Layer) - also die untersten zwei Schichten des sogenannten OSI-Referenzmodels zur technischen Umsetzung der Datenübertragung - betrifft. Gemäß diesem Standard werden mehrere drahtlose Kanäle verwendet, von denen ein Kanal als Steuerungskanal dient. Auf diesem Steuerungskanal werden periodisch Fahrzeug-Statusinformationen gesendet. Daher müssen alle in den Fahrzeugen vorhandenen Netzwerkknoten diesen Steuerungskanal kontinuierlich oder periodisch abhören. Sendewünsche für andere Kanäle werden dem jeweiligen Zielknoten zunächst auf dem Steuerungskanal mitgeteilt.

Da die Übertragungsmethoden der Drahtlosnetzwerke (WLAN) in der Regel unsynchronisiert sind, d.h. die an dem System teilnehmenden Sende- und Empfangseinrichtungen keine gemeinsame Zeitbasis aufweisen, werden für normale Informationen (nachfolgend auch Infotainment genannt) und Sicherheitsinformationen für Sicherheitsanwendungen getrennte Frequenzbereiche vorgesehen, beispielsweise WLAN nach den Standards IEEE802.11a/b/g/n für Infotainment und WLAN nach dem Standard IEEE802.11p für Sicherheitsanwendungen.

Zum Beispiel, Dokument "A multichannel VANET providing concurrent safety and commercial services" von Tony K. Mak et al, offenbart ein Verfahren zur Übertragung von Informationen in einer Fahrzeug-zu-Fahrzeug-Kommunikation, bei der Sicherheits informationen nach dem DSRC standard und nicht sicherheits relevante Informationen nach dem IEEE 802.11a Standard übertragen werden, indem ein WLAN-Chipsatz zwischen einem ersten (DSRC) Modus und einem zweiten (IEEE 802.11a) Modus umgeschaltet wird. Eine andere Möglichkeit bei WLAN nach dem Standard IEEE802.11p sieht vor, dass mehrere nebeneinander liegende Kanäle für die unterschiedlichen Aufgaben (Kontrollkanal, Servicekanal) verwendet werden. Bei Verwendung unterschiedlicher Frequenzen muss jedoch verschiedene Hardware eingesetzt werden. Meist ist je Kanal ein Empfänger erforderlich. Dadurch benötigt ein Fahrzeug beide Hardwarekomponenten, um beide Funktionsbereiche (Sicherheitsanwendungen und Infotainment) abdecken zu können. Aufgabe der vorliegenden Erfindung ist es, eine Möglichkeit vorzuschlagen, mit der eine einzige Hardware für die Übertragung von Sicherheitsinformationen und Infotainment genutzt werden kann.

Diese Aufgabe wird mit den Merkmalen der Ansprüche 1, 4 und 5 gelöst.

Bei der erfindungsgemäß vorgeschlagenen Vorrichtung zum Empfangen von Informationen in einer auf WLAN nach dem IE-EE802.11-Standard basierenden Fahrzeug-zu-Fahrzeug-Kommunikation, bei der sowohl Sicherheitsinformationen nach dem IEEE802.11p-Standard als auch nicht sicherheitsrelevante Informationen nach einem anderen IEEE802.11-Standard, insbesondere nach dem IEEE802.11a, b, g und/oder n-Standard, übertragen werden ist eine Sende- und/oder Empfangseinrichtung mit einem WLAN-Chipsatz vorgesehen, um die Informationen übertragen, d.h. Senden und/oder Empfangen zu können.

Der in der Empfangseinrichtung vorgesehene WLAN-Chipsatz ist erfindungsgemäß mittels eines Steuerbefehls zwischen einem ersten Sende- bzw. Empfangsmodus nach dem IE-EE802.11p-Standard und einem zweiten Sende- bzw. Empfangsmodus nach dem anderen IEEE802.11-Standard umschaltbar. Dazu weist die Vorrichtung eine Steuereinrichtung auf, welche den Modus des WLAN-Chipsatzes mittels Steuerbefehl umschaltet.

Derartige Chipsätze, die auf unterschiedliche Übertragungsmodi einstellbar sind, sind grundsätzlich bereits bekannt. Beispielsweise bietet die Firma Atheros bereits derartige Chips an. Typischerweise sind diese einstellbaren Chips in verschiedenen Frequenzbereichen einsetzbar, bspw. 2,4 GHz und 5,8 GHz, und in den dazu passenden Modi, bspw. IE-EE802.11a für 5,8 GHz gegenüber IEEE802.11b/g für 2,4 GHz. Über Softwaremodifikationen können diese Chips auch für den IEEE802.11p-Standard bei 5,9 GHz eingesetzt werden. Demnächst sind weitere WLAN-Chipsätze zu erwarten, die auch nominell für den IEEE802.11p Standard bei 5,8 GHz ausgelegt sind und auf andere Frequenzbereiche umgeschaltet werden können.

Vorzugsweise ist die Steuereinrichtung dazu eingerichtet, den Steuerbefehl zur Umschaltung des Modus in Abhängigkeit eines bestimmten Fahrzeugzustands zu geben. Beispielsweise wird bei einem bewegten Fahrzeug in den ersten, die Übertragung von Sicherheitsinformationen ermöglichenden Modus geschaltet. Bei Stillstand des Fahrzeugs kann dann auf den zweiten Modus des WLAN-Chipsatzes umgeschaltet werden, um nicht sicherheitsrelevante Informationen, insbesondere sogenannte Infotainment-Informationen, übertragen zu können. Bei Stillstand des Fahrzeugs, d.h. wenn es nicht am Straßenverkehr teilnimmt, können auch diese nicht sicherheitsrelevanten Informationen übertragen werden, ohne dass der Fahrer abgelenkt wird. Während der Fahrt sollten dagegen derartige Informationen nicht übertragen werden, um die Aufmerksamkeit des Fahrers nicht zu beeinträchtigen. Daher ist es erfindungsgemäß besonders sinnvoll, eine einzige Hardware vorzusehen, welche zwischen verschiedenen Sende- und Empfangsmodi umschaltbar ist, um sicherheitsrelevante Informationen und Infotainment-Informationen zu verschiedenen Zeiten übertragen zu können. Das Umschalten zwischen den verschieden Übertragungsmodi kann dann automatisch in Abhängigkeit von dem Zustand des Fahrzeugs (Fahrbetrieb, Ruhezeit oder dergleichen) erfolgen.

Insbesondere um den Fahrzeugzustand einfach ermitteln zu können, kann die Steuereinrichtung vorzugsweise eine Schnittstelle zu einem Fahrzeugsteuersystem aufweisen. Als Fahrzeugsteuersystem kommen insbesondere Assistenzsysteme wie ESP, Fahrerassistenzsysteme oder das APIA (Activ Passiv Integration Approach) in Frage, welches der Unfallvermeidung bzw. Milderung von Unfallfolgen durch Kommunikation aller passiven und aktiven Sicherheitssysteme und einer Bewertung der Unfallwahrscheinlichkeit dient. Dieses System ist in der WO 2004/08522 A1 ausführlich beschrieben.

Erfindungsgemäß erstreckt sich die vorliegende Erfindung auch auf die Verwendung eines WLAN-Chipsatzes für das Übertragen von Informationen in einer auf WLAN nach dem IE-EE802.11-Standard basierenden Fahrzeug-zu-Fahrzeug-Kommunikation, der mittels eines Steuerbefehls zwischen einem ersten Sende- bzw. Empfangsmodus nach dem IEEE802.11p-Standard und mindestens einem weiteren Sende- bzw. Empfangsmodus nach einem anderen IEEE802.11-Standard mittels eines Steuerbefehls umschaltbar ist. Im Rahmen der Kommunikation werden sowohl Sicherheitsinformationen nach dem IE-EE802.11p-Standard als auch nicht sicherheitsrelevante Informationen (Infotainment) nach einem anderen IEEE802.11-Standard, insbesondere IEEE802.11a-, b-, g- und/oder n-Standard, übertragen. Durch diese Verwendung wird das Vorsehen zweier unterschiedlicher WLAN-Chipsätze für auf unterschiedlichen Frequenzen stattfindende Fahrzeug-zu-Fahrzeug-Kommunikation vermieden.

In ähnlicher Weise betrifft die vorliegende Erfindung auch ein Verfahren zum Übertragen von Informationen in einer auf WLAN nach dem IEEE802.11-Standard basierenden Fahrzeug-zu-Fahrzeug-Kommunikation, bei der sowohl Sicherheitsinformationen nach dem IEEE802.11p-Standard als auch nicht sicherheitsrelevante Informationen nach einem anderen IEEE802.11-Standard, insbesondere den vorerwähnten Standards, übertragen werden. Damit diese Übertragung unter Verwendung einer einzigen Sende- und Empfangshardware erfolgen kann, wird erfindungsgemäß vorgeschlagen, einen WLAN-Chipsatz zwischen einem ersten Sende- beziehungsweise Empfangsmodus nach dem IEEE802.11p-Standard und einem zweiten Sende- beziehungsweise Empfangsmodus nach einem anderen IEEE802.11-Standard umzuschalten.

Erfindungsgemäß ist es besonders vorteilhaft, wenn die Umschaltung des Modus des WLAN-Chipsatzes abhängig von dem Fahrzeugzustand erfolgt. In diesem Fall kann die Umschaltung des WLAN-Chipsatzes aufgrund vorgegebener Regeln automatisch durchgeführt werden.

Insbesondere kann dazu vorgesehen werden, dass die Umschaltung auf den ersten Modus nach dem IEEE802.11p-Standard bei einem fahrenden Fahrzeug erfolgt. Hierzu kann die den Steuerbefehl zur Umschaltung gebende Steuereinrichtung beispielsweise über eine Schnittstelle zu einem Fahrzeugsteuerungssystem feststellen, ob sich das Fahrzeug bewegt, ob der Fahrzeugmotor läuft oder dergleichen. Während dieser Fahrzeugbenutzung im regulären Fahrbetrieb können dann keine Infotainment-Anwendungen gesendet werden. Nur in einem Fahrzeugzustand, der darauf schließen lässt, dass das Fahrzeug nicht am Straßenverkehr teilnimmt, wird auf den anderen IEEE802.11-Standard umgeschaltet und der Empfang von Infotainment-Anwendungen ermöglicht.

Gemäß einer anderen Ausgestaltung kann die Umschaltung zwischen dem ersten Modus nach dem IEEE802.11p-Standard und dem zweiten Modus nach einem anderen IEEE802.11-Standard auch nach vorgegebenen Zeitabständen erfolgen. Hierdurch werden bestimmte Zeitschlitze (Slots) definiert, in welchen die IEEE802.11p-Übertragung von Sicherheitsinformationen möglich ist. Während der übrigen Zeiten können dann Infotainment-Anwendungen übertragen werden, auch unabhängig davon, ob das Fahrzeug bewegt wird oder nicht. Diese Kombination der Übertragung kann auch mit der vorher beschriebenen Umschaltung in Abhängigkeit des Fahrzeugzustands kombiniert werden, beispielsweise um auch bei einem stehenden und nicht am Fahrbetrieb teilnehmenden Fahrzeug regelmäßig Sicherheitsinformationen zu erhalten.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
Fig. 1 schematisch eine erfindungsgemäße Vorrichtung zum Empfangen oder Senden von Informationen nach verschiedenen WLAN-IEEE802.11-Standards;
Fig. 2 schematisch den Ablauf des Verfahrens zum Umschalten zwischen verschiedenen Sende- und Empfangsmodi und
Fig. 3 eine zeitbasierte Umschaltung der verschiedenen Sende- und Empfangsmodi.

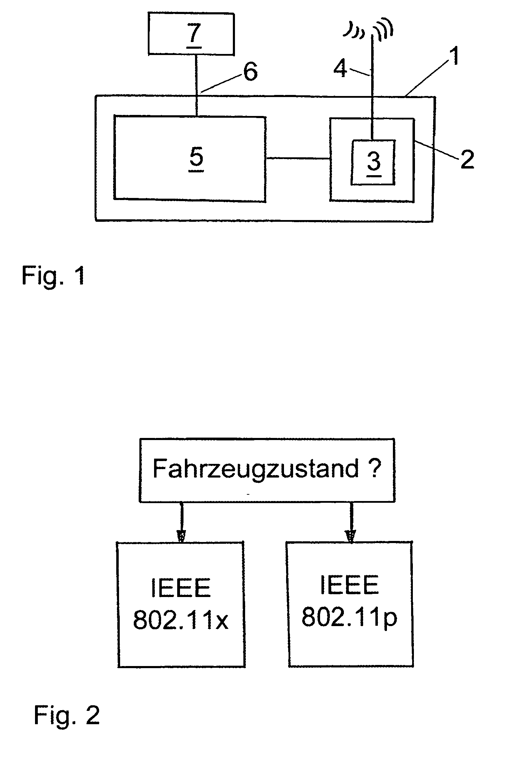

Die in Fig. 1 dargestellte Vorrichtung 1 zur Übertragung von Informationen in der Fahrzeug-zu-Fahrzeug-Kommunikation mittels WLAN-Kommunikation nach dem IEEE802.11-Standard weist eine Sende- und/oder Empfangseinrichtung 2 auf, in welcher ein WLAN-Chipsatz 3 aufgenommen ist, welcher das Aussenden und/oder Empfangen von Funkkommunikationsbotschaften ermöglicht. Dazu ist der WLAN-Chipsatz 3 mit einer geeigneten Antenne 4 verbunden.

Der WLAN-Chipsatz 3 und die Antenne 4 sind auf die Trägerfrequenz eingerichtet, mit der die Funktelegramme in der Fahrzeug-zu-Fahrzeug-Kommunikation übertragen werden.

Um sowohl Sicherheitsinformationen nach dem IEEE802.11p-Standard als auch nicht sicherheitsrelevante Informationen (sogenannte Infotainment-Informationen) nach einem anderen IEEE802.11-Standard übertragen, d.h. empfangen und/oder senden, zu können, ist der WLAN-Chipsatz 3 zwischen einem ersten Sende- und Empfangsmodus nach dem IEEE802.11p-Standard und einem zweiten Sende- und Empfangsmodus nach einem anderen IEEE802.11-Standard umschaltbar. Der andere Modus sieht insbesondere eine Übertragung nach dem IE-EE802.11a-, b-, g- und/oder n-Standard vor.

Das Umschalten des WLAN-Chipsatzes 3 erfolgt durch einen von einer Steuereinrichtung 5 erzeugten Steuerbefehl, der nach vorgegebenen Regeln oder gegebenenfalls auch auf Veranlassung des Fahrers des Fahrzeugs erzeugt werden kann.

Um den Steuerbefehl in Abhängigkeit von dem Fahrzeugzustand geben zu können, ist die Steuereinrichtung 5 mit einer Schnittstelle 6 zu einem als Fahrerassistenzsystem ausgebildeten Fahrzeugsteuersystem 7 ausgestattet, das Informationen darüber hat, ob sich das Fahrzeug bewegt bzw. an dem Straßenverkehr teilnimmt oder beispielsweise gerade geparkt ist. Abhängig von diesen Informationen schaltet die Steuereinrichtung 5 den WLAN-Chipsatz 3 dann zwischen einem ersten Modus nach dem IEEE802.11p-Standard und einem zweiten Modus nach einem anderen IEEE802.11-Standard um, wobei der erste Modus gewählt wird, wenn sich das Fahrzeug bewegt bzw. aktiv am Straßenverkehr teilnimmt und der zweite Modus gewählt wird, wenn das Fahrzeug parkt bzw. nicht aktiv am Straßenverkehr teilnimmt. In dem ersten Modus werden Sicherheitsinformationen und in dem zweiten Modus nicht sicherheitsrelevante Infotainment-Informationen übertragen.

Fig. 2 zeigt schematisch den Ablauf des vorgeschlagenen Verfahrens in einem einfachen Flussdiagramm.

In einem ersten Schritt ermittelt die Steuereinrichtung 5 den Fahrzeugzustand. Im Falle eines bewegten Fahrzeugs, das am Straßenverkehr teilnimmt, erzeugt es einen Steuerbefehl, der den WLAN-Chipsatz auf den ersten Modus nach dem IE-EE802.11p-Standard umschaltet bzw. in diesem Modus hält, sofern dieser bereits eingeschaltet ist.

Bei einem stehenden, nicht am Straßenverkehr teilnehmenden Fahrzeug wird dagegen ein Steuerbefehl erzeugt, welcher den WLAN-Chipsatz 3 in einen anderen IEEE802.11-Standard schaltet, insbesondere den a-, b-, g- oder n-Standard. Die Abfrage des Fahrzeugzustands erfolgt erfindungsgemäß in vorgebbaren Zeitabständen, so dass eine Änderung des Fahrzeugzustands schnell festgestellt und der WLAN-Chipsatz 3 entsprechend geschaltet werden kann.

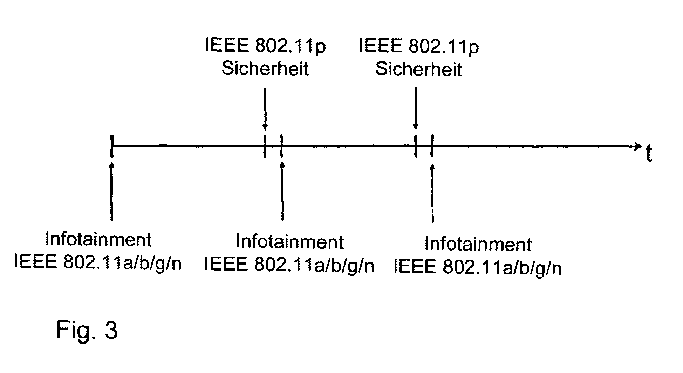

Gemäß Fig. 3 ist eine Alternative zur Umschaltung zwischen den verschiedenen WLAN-Modi des WLAN-Chipsatzes 3 schematisch dargestellt. Bei dieser Ausführungsform erfolgt die Umschaltung des Modus des WLAN-Chipsatzes 3 nach vorgegebenen Zeitabständen, so dass der WLAN-Chipsatz 3 in dem ersten Modus nach dem IEEE802.11p-Standard zum Empfang von Sicherheitsinformationen und in dem zweiten Modus nach dem IEEE802.11a-, b-, g- oder n-Standard zum Empfang von Infotainment-Informationen eingerichtet ist.

Erfindungsgemäß ist es somit möglich, mit einem einzigen Chipsatz WLAN-Funkübertragungen auf verschiedenen Frequenzen zu realisieren, so dass für die Fahrzeug-zu-Fahrzeug-Kommunikation nur eine Hardware notwendig ist, auch wenn sowohl Sicherheits- als auch Infotainment-Informationen übertragen werden sollen.

### Bezugszeichenliste:

- 1: Vorrichtung zur Übertragung von Informationen
- 2: Sende- und Empfangseinrichtung
- 3: WLAN-Chipsatz
- 4: Antenne
- 5: Steuereinrichtung
- 6: Schnittstelle
- 7: Fahrzeugsteuersystem

## Patentansprüche

1. Vorrichtung zum Übertragen von Informationen in einer auf WLAN nach dem IEEE802.11-Standard basierenden Fahrzeug-zu-Fahrzeug-Kommunikation, bei der sowohl Sicherheitsinformationen nach dem IEEE802.11p-Standard als auch nicht sicherheitsrelevante Informationen nach einen anderen IE-EE802.11-Standard übertragen werden, mit einer einen WLAN-Chipsatz (3) aufweisenden Sende- und/oder Empfangseinrichtung (2), der WLAN-Chipsatz (3) mittels eines Steuerbefehls zwischen einem ersten Modus nach dem IE-EE802.11p-Standard und einem zweiten Modus nach einem anderen IEEE802.11-Standard umschaltbar ist und dass die Vorrichtung (1) eine Steuereinrichtung (5) aufweist, welche den Modus des WLAN-Chipsatzes (3) mittels Steuerbefehl umschaltet, **dadurch kennzeichnet,**
**dass** die Steuereinheit 5 mit einer Schnittstelle 6 zu einem als Fahrerassistenzsystem ausgebildeten Fahrzeugsteuersystem 7 ausgestattet ist,
und **dass** die Steuereinheit 5 den Fahrzeugzustand ermittelt, die Umschaltung des Modus des WLAN-Chipsatzes (3) abhängig von dem Fahrzeugzustand erfolgt und Umschaltung auf den ersten Modus nach dem IEEE 802.11p. Standard bei einem fahrenden Fahrzeug erfolgt.

2. Vorrichtung nach Anspruch 1, **dadurch gekennzeichnet, dass** die Steuereinrichtung (5) dazu eingerichtet ist, den Steuerbefehl zur Umschaltung des Modus in Abhängigkeit eines Fahrzeugzustands zu geben.

3. Vorrichtung nach Anspruch 1 oder 2, **dadurch gekennzeichnet, dass** die Steuereinrichtung (5) eine Schnittstelle (6) zu einem Fahrzeugsteuersystem (7) aufweist.

4. Verwendung eines WLAN-Chipsatzes (3), der mittels eines Steuerbefehls zwischen einem ersten Modus nach dem IEEE802.11p-Standard und einem zweiten Modus nach einem anderen IEEE802.11-Standard umschaltbar ist, für das Übertragen von Informationen in einer auf WLAN nach dem IEEE802.11-Standard basierenden Fahrzeug-zu-Fahrzeug-Kommunikation, in der sowohl Sicherheitsinformationen nach dem IEEE802.11p-Standard als auch nicht sicherheitsrelevante Informationen nach einen anderen IEEE802.11-Standard übertragen werden,
**dadurch kennzeichnet, dass** die Steuereinheit 5 den Fahrzeugzustand ermittelt, die Umschaltung des Modus des WLAN-Chipsatzes (3) abhängig von dem Fahrzeugzustand erfolgt und Umschaltung auf den ersten Modus nach dem IEEE 802.11p. Standard bei einem fahrenden Fahrzeug erfolgt.

5. Verfahren zum Übertragen von Informationen in einer auf WLAN nach dem IEEE802.11-Standard basierenden Fahrzeug-zu-Fahrzeug-Kommunikation, bei der sowohl Sicherheitsinformationen nach dem IEEE802.11p-Standard als auch nicht sicherheitsrelevante Informationen nach einen anderen IE-EE802.11-Standard übertragen werden, ein WLAN-Chipsatz (3) zwischen einem ersten Modus nach dem IEEE802.11p-Standard und einem zweiten Modus nach einem anderen IE-EE802.11-Standard umgeschaltet wird,
**dadurch kennzeichnet,**
**dass** die Steuereinheit 5 den Fahrzeugzustand ermittelt, die Umschaltung des Modus des WLAN-Chipsatzes (3) abhängig von dem Fahrzeugzustand erfolgt und Umschaltung auf den ersten Modus nach dem IEEE802.11p-Standard bei einem fahrenden Fahrzeug erfolgt.

6. Verfahren nach Anspruch 5,
**dadurch kennzeichnet,**
**dass** die Umschaltung des Modus des WLAN-Chipsatzes (3) abhängig von dem Fahrzeugzustand erfolgt.

7. Verfahren nach Anspruch 6,
**dadurch kennzeichnet,**
**dass** die Umschaltung auf den ersten Modus nach dem IE-EE802.11p-Standard bei einem fahrenden Fahrzeug erfolgt.

8. Verfahren nach einem der Ansprüche 5 bis 7,
**dadurch kennzeichnet,**
**dass** die Umschaltung zwischen dem ersten Modus nach dem IEEE802.11p-Standard und dem zweiten Modus nach einem anderen IEEE802.11-Standard nach vorgegebenen Zeitabständen erfolgt.

## Claims

1. Apparatus for transmitting information in vehicle-to-vehicle communication based on IEEE802.11 standard WLAN, which involves both safety information based on the IEEE802.11p standard and non-safety-related information based on another IEEE802.11 standard being transmitted, having a transmission and/or reception device (2) which has a WLAN chipset (3),
the WLAN chipset (3) can be changed over by means of a control command between a first mode based on the IEEE802.11p standard and a second mode based on another IEEE802.11 standard, and in that the apparatus (1) has a control device (5) which changes over the mode of the WLAN chipset (3) using a control command, **characterized in that** the control unit (5) is equipped with an interface (6) to a vehicle control system (7) which is in the form of a driver assistance system,
and **in that** the control unit (5) determines the vehicle state, the mode of the WLAN chipset (3) is changed over on the basis of the vehicle state, and the changeover to the first mode based on the IEEE802.11p standard is effected when a vehicle is traveling.

2. Apparatus according to Claim 1, **characterized in that** the control device (5) is set up to give the control command for changing over the mode on the basis of a vehicle state.

3. Apparatus according to Claim 1 or 2, **characterized in that** the control device (5) has an interface (6) to a vehicle control system (7).

4. Use of a WLAN chipset (3), which can be changed over by means of a control command between a first mode based on the IEEE802.11p standard and a second mode based on another IEEE802.11 standard, for transmitting information in vehicle-to-vehicle communication based on IEEE802.11 standard WLAN, in which both safety information based on the IEEE802.11p standard and non-safety-related information based on another IEEE802.11 standard are transmitted, **characterized in that** the control unit (5) determines the vehicle state, the mode of the WLAN chipset (3) is changed over on the basis of the vehicle state, and the changeover to the first mode based on the IEEE802.11p standard is effected when a vehicle is traveling.

5. Method for transmitting information in vehicle-to-vehicle communication based on IEEE802.11 standard WLAN, which involves both safety information based on the IEEE802.11p standard and non-safety-related information based on another IEEE802.11 standard being transmitted,
a WLAN chipset (3) is changed over between a first mode based on the IEEE802.11p standard and a second mode based on another IEEE802.11 standard, **characterized in that** the control unit (5) determines the vehicle state, the mode of the WLAN chipset (3) is changed over on the basis of the vehicle state, and the changeover to the first mode based on the IEEE802.11p standard is effected when a vehicle is traveling.

6. Method according to Claim 5,
**characterized**
**in that** the mode of the WLAN chipset (3) is changed over on the basis of the vehicle state.

7. Method according to Claim 6,
**characterized**
**in that** the changeover to the first mode based on the IEEE802.11p standard is effected when a vehicle is traveling.

8. Method according to one of Claims 5 to 7,
**characterized**
**in that** the changeover between the first mode based on the IEEE802.11p standard and the second mode based on another IEEE802.11 standard is effected after prescribed intervals of time.

## Revendications

1. Dispositif de transmission d'informations dans une communication de véhicule à véhicule basée sur un WLAN selon la norme IEEE802.11, dans lequel des informations de sécurité sont transmises selon la norme IEEE802.11p et des informations ne concernant pas la sécurité sont transmises selon une autre norme IEEE802.11, et présentant un dispositif (2) d'émission et/ou de réception doté d'un jeu (3) de circuits de processeur WLAN, le jeu (3) de circuits de processeur WLAN pouvant être commuté au moyen d'un ordre de commande entre un premier mode selon la norme IEEE802.11p et un deuxième mode selon une autre norme IEEE802.11 et le dispositif (1) présentant un dispositif de commande (5) qui commute le mode du jeu (3) de circuits de processeur WLAN au moyen de l'ordre de commande,
**caractérisé en ce que**
l'unité de commande (5) est dotée d'une interface (6) avec un système (7) de commande du véhicule configuré comme système d'assistance au conducteur et
**en ce que** l'unité de commande (5) détermine l'état du véhicule, la commutation du mode du jeu (3) de circuits de processeur WLAN s'effectuant en fonction de l'état du véhicule et la commutation sur le premier mode s'effectuant selon la norme IEEE802.11p lorsque le véhicule se déplace.

2. Dispositif selon la revendication 1, **caractérisé en ce que** le dispositif de commande (5) est conçu pour délivrer l'ordre de commande de commutation du mode en fonction d'un état du véhicule.

3. Dispositif selon les revendications 1 ou 2, **caractérisé en ce que** le dispositif de commande (5) présente une interface (6) avec un système (7) de commande du véhicule.

4. Utilisation d'un jeu (3) de circuits de processeur WLAN qui peut être commuté au moyen d'un ordre de commande entre un premier mode selon la norme IEEE802.11p et un deuxième mode selon une autre norme IEEE802.11 pour la transmission d'informations dans une communication de véhicule à véhicule basée sur un WLAN selon la norme IEEE802.11, dans laquelle des informations de sécurité sont transmises selon la norme IEEE802.11p et des informations ne concernant pas la sécurité sont transmises selon une autre norme IEEE802.11,
**caractérisée en ce que**
l'unité de commande (5) détermine l'état du véhicule, la commutation du mode du jeu (3) de circuits de processeur WLAN s'effectuant en fonction de l'état du véhicule et la commutation sur le premier mode s'effectuant selon la norme IEEE802.11p lorsque le véhicule se déplace.

5. Procédé de transmission d'informations dans une communication de véhicule à véhicule basée sur un WLAN selon la norme IEEE802.11, dans lequel des informations de sécurité sont transmises selon la norme IEEE802.11p et des informations ne concernant pas la sécurité sont transmises selon une autre norme IEEE802.11, un jeu (3) de circuits de processeur WLAN étant commuté entre un premier mode selon la norme IEEE802.11p et un deuxième mode selon une autre norme IEEE802.11,
**caractérisé en ce que**
l'unité de commande (5) détermine l'état du véhicule, la commutation du mode du jeu (3) de circuits de processeur WLAN s'effectuant en fonction de l'état du véhicule et la commutation sur le premier mode s'effectuant selon la norme IEEE802.11p lorsque le véhicule se déplace.

6. Procédé selon la revendication 5, **caractérisé en ce que** la commutation du mode du jeu (3) de circuits de processeur WLAN s'effectue en fonction de l'état du véhicule.

7. Procédé selon la revendication 6, **caractérisé en ce que** la commutation sur le premier mode s'effectue selon la norme IEEE802.11p lorsque le véhicule se déplace.

8. Procédé selon l'une des revendications 5 à 7, **caractérisé en ce que** la commutation entre le premier mode selon la norme IEEE802.11p et le deuxième mode selon une autre norme IEEE802.11 s'effectue après des intervalles de temps prédéterminés.
